(19) Europäisches Patentamt
European Patent Office
Office européen des brevets

(11) **EP 1 844 373 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(21) Anmeldenummer: 06701273.2

(22) Anmeldetag: **12.01.2006**

(51) Int Cl.:
*G05D 1/02* (2006.01)   *B60K 31/00* (2006.01)

(86) Internationale Anmeldenummer:
**PCT/EP2006/050184**

(87) Internationale Veröffentlichungsnummer:
**WO 2006/077194 (27.07.2006 Gazette 2006/30)**

(54) **VERFAHREN ZUR KURSPRÄDIKTION IN FAHRERASSISTENZSYSTEMEN FÜR KRAFTFAHRZEUGE**

METHOD FOR PREDICTING THE COURSE IN DRIVER ASSISTANCE SYSTEMS FOR MOTOR VEHICLES

PROCEDE POUR PREVOIR LA TRAJECTOIRE D'AUTOMOBILES DANS DES SYSTEMES D'ASSISTANCE AU CONDUCTEUR

(84) Benannte Vertragsstaaten:
**DE FR GB IT**

(30) Priorität: **24.01.2005 DE 102005003192**

(43) Veröffentlichungstag der Anmeldung:
**17.10.2007 Patentblatt 2007/42**

(73) Patentinhaber: **Robert Bosch GmbH**
**70442 Stuttgart (DE)**

(72) Erfinder: **CITELLI, Silvia**
**70499 Stuttgart (DE)**

(56) Entgegenhaltungen:
EP-A- 0 313 223       WO-A-01/95141
DE-A1- 19 738 764     DE-C1- 19 921 449
US-A- 5 913 376       US-A1- 2002 121 989
US-A1- 2003 116 373

**Beschreibung**

Stand der Technik

Die Erfindung betrifft ein Verfahren zur Kursprädiktion in Fahrerassistenzsystemen für Kraftfahrzeuge, bei dem anhand von fahrdynamischen Daten des Fahrzeugs eine dynamische Kurshypothese erstellt wird, vgl. US 2003/116373 A.

Bei Fahrerassistenzsystemen, die den Fahrer bei der Führung des Fahrzeugs unterstützen und/oder vor akuten Gefahren warnen, automatisch Maßnahmen zur Abwendung einer Kollisionsgefahr einleiten oder Sicherheitssysteme zur Vorbereitung auf die Kollision aktivieren, ist es häufig erforderlich, den voraussichtlichen Kurs des eigenen Fahrzeugs vorherzusagen. Ein typisches Beispiel eines solchen Fahrerassistenzsystems ist ein dynamischer Fahrgeschwindigkeitsregler (ACC; Adaptive Cruise Control), mit dem die Geschwindigkeit des eigenen Fahrzeugs automatisch auf die Geschwindigkeit eines vorausfahrenden Fahrzeugs geregelt wird, das mit Hilfe eines Radar- oder Lidar-Systems geortet wird. Die Kursprädiktion dient dann vor allem zur Entscheidung, ob ein erfaßtes Objekt als Zielobjekt für die Abstandsregelung auszuwählen ist oder ob dieses Objekt ein irrelvantes Objekt, beispielsweise ein Fahrzeug auf einer Nebenspur ist.

Solche ACC-Systeme sind bereits erfolgreich im Einsatz, doch beschränkt sich das Einsatzgebiet bisher zumeist auf Fahrten auf Autobahnen oder gut ausgebauten Landstraßen. In diesen Situationen kann man sich bei der Analyse des Verkehrsumfelds in der Regel auf bewegliche Ziele, beispielsweise auf vorausfahrende Fahrzeuge, beschränken, während Standziele, beispielsweise stehende Objekte am Fahrbahnrand, ignoriert werden können. Zur Vorhersage des eigenen Kurses wird bei solchen Systemen in erster Linie die aktuelle Fahrzeuggeschwindigkeit und die Gierrate des eigenen Fahrzeugs herangezogen. Anhand dieser Daten wird eine Kurshypothese erstellt, indem die Mittellinie des voraussichtlichen Kurses mathematisch als Parabel beschrieben wird, deren Krümmung durch das Verhältnis von Gierrate und Fahrzeuggeschwindigkeit gegeben ist. Diese aus fahrdynamischen Daten gewonnene Kurshypothese soll hier als "dynamische Kurshypothese" bezeichnet werden.

Es gibt Bestrebungen, den Einsatzbereich von ACC-Systemen auf andere Verkehrssituationen zu erweitert, beispielsweise Stop-and-Go-Situationen auf Autobahnen, auf Fahrten auf Landstraßen und letztlich auch auf Fahrten im Stadtverkehr. In diesen Situationen, in denen generell auch Standziele berücksichtigt werden müssen und somit die Auswahl von gültigen Zielobjekten und die Erkennung von Hindernissen wesentlich komplexer ist, werden auch an die Genauigkeit der Kursprädiktion höhere Anforderungen gestellt.

Es ist bereits vorgeschlagen worden, für die Kursprädiktion auch Daten aus anderen Informationsquellen heranzuziehen, beispielsweise die mit Hilfe des Radarsystems erfaßbare Kollektivbewegung anderer Fahrzeuge, Daten aus einem Navigationssystem, Ortungsdaten von Standzielen am Fahrbahnrand oder auch Informationen, die von einem Mono- oder Stereo-Videosystem geliefert werden. Die Einbeziehung dieser zusätzlichen Informationen in die Kursprädiktion beruht jedoch bisher auf einem eher kasuistischen Ansatz und verbessert die Kursprädiktion allenfalls in speziellen, eng begrenzten Situationen. Die auf diese Weise erreichbare Genauigkeit und Zuverlässigkeit der Kursprädiktion ist daher für fortgeschrittene Fahrerassistenzsysteme nicht ausreichend.

Vorteile der Erfindung

Die Erfindung mit den in Anspruch 1 angegebenen Merkmalen bietet den Vorteil, daß durch eine systematische Integration von Informationen aus mehreren verfügbaren Informationsquellen eine genauere und zuverlässigere Kursprädiktion ermöglicht wird.

Dies wird erfindungsgemäß durch die folgenden Verfahrensschritte erreicht:

- Erstellen einer Infrastruktur-Kurshypothese anhand von Daten, die die Verkehrsinfrastruktur beschreiben, aus mindestes einer Informationsquelle;

- Berechnen eines Gewichtsfaktors, der die Verläßlichkeit der Infrastruktur-Kurshypothese beschreibt, anhand von Merkmalen der Informationsquelle; und

- Fusionionieren der Infrastruktur-Kurshypothese mit der dynamischen Kurshypothese mit Gewichtung entsprechend dem berechneten Gewichtsfaktor, zur Bildung einer endgültigen Kurshypothese.

Geeignete Informationsquellen für die Infrastrukturdaten sind z. B. das bei einem ACC-System ohnehin vorhandene Radarsystem, ein Navigationssystem und/oder ein Mono- oder Stereo-Videosystem. Die Infrastrukturdaten lassen sich z. B. extrahieren aus mit Hilfe des Radarsystems verfolgten Trajektorien anderer Fahrzeuge, Standzielen am Fahrbahnrand, wie Leitplanken und dergleichen, die ebenfalls vom Radarsystem geortet werden können, vom Navigationssystem bereitgestellten Daten über den Fahrbahnverlauf und/oder dem mit Hilfe des Videosystems erkannten Verlauf von Fahrbahnmarkierungen oder sonstigen Fahrbahnbegrenzungen wie Bordsteinkanten und dergleichen.

Aus diesen Infrastrukturdaten wird mindestens eine Infrastruktur-Kurshypothese generiert, die einen aufgrund der Fahrbahngeometrie möglichen Kurs des eigenen Fahrzeugs beschreibt, beispielsweise in der Form eines Linienzuges, der in der Mitte des voraussichtlich von dem Fahrzeug überstrichenen Fahrschlauches verläuft.

Aufgrund von Meßungenauigkeiten oder begrenzter Auflösung der verwendeten Informationsquellen sowie aufgrund von Unsicherheiten bei der Interpretation der Infrastrukturdaten hat die auf diese Weise generierte Kurshypothese nur eine begrenzte Verläßlichkeit, die für jede Informationsquelle oder Kombination von Informationsquellen anhand der bekannten Eigenschaften in dieser Informationsquelle und/oder ihres aktuellen Zustands abgeschätzt werden kann. Diese Abschätzung erfolgt mit einem geeigneten Algorithmus, der aus den Merkmalen der Informationsquelle einen Gewichtsfaktor bildet, der um so größer ist, je größer die Verläßlichkeit der Daten ist.

Um eine endgültige Kurshypothese zu erstellen, die dem tatsächlich zu erwartenden Kursverlauf möglichst nahe kommt, werden die dynamische Kurshypothese und die Infrastruktur-Kurshypothese fusioniert, indem eine gewichtete Kombination dieser beiden Kurshypothesen gebildet wird. Auf diese Weise wird erreicht, daß alle verfügbaren Informationen in angemessener Weise in die endgültige Kurshypothese einfließen. Dabei wird insbesondere eine hohe Robustheit der Kursprädiktion erreicht, da momentane, situationsbedingte Schwächen der einen oder anderen Erkenntnisquelle durch stärkere Gewichtung der anderen Erkenntnisquelle kompensiert werden können.

Vorteilhafte Ausgestaltungen und Weiterbildungen der Erfindung ergeben sich aus den Unteransprüchen.

Vorzugsweise wird der Linienzug, der die dynamische Kurshypothese angibt, durch ein Polynom oder mehrere sich stetig aneinander anschließende Polynomstücke in einem geeigneten Koordinatensystem repräsentiert, beispielsweise in der Form von Polynomen dritten Grades, und die Infrastruktur-Kurshypothese wird in demselben Koordinatensystem durch ein Polynom oder entsprechende Polynomstücke von derselben Form repräsentiert, also beispielsweise ebenfalls durch Polynome dritten Grades. Dies ermöglicht eine einfache Fusion, indem aus den einander entsprechenden Koeffizienten der Polynome jeweils eine gewichtete Summe gebildet wird.

Da die dynamische Kurshypothese mit zunehmendem Abstand vom eigenen Fahrzeug an Aussagekraftund Verläßlichkeit verliert, kann es zweckmäßig sein, die Gewichte mit zunehmendem Abstand stärker zur Infrastruktur-Kurshypothese zu verschieben.

Wenn zur Bildung der Infrastruktur-Kurshypothese mehrere verschiedene Informationsquellen benutzt werden, ist es zweckmäßig, die Daten aus den verschiedenen

Quellen zueinander in Beziehung zu setzen und miteinander abzugleichen, was nicht nur die Genauigkeit erhöht, sondern auch eine realistischere Abschätzung des Gewichtsfaktors ermöglicht, da eine hohe Konsistenz der Daten aus verschiedenen Quellen für eine hohe Verläßlichkeit spricht. Gemäß einer Ausführungsform kann aus den Infrastrukturdaten jeder einzelnen Informationsquelle eine vorläufige Kurshypothese gebildet werden, und diese Hypothesen werden dann analog zu dem oben beschriebenen Verfahren zu der Infrastruktur-Kurshypothese fusioniert. Auch dabei kann die Verläßlichkeit der verschiedenen Informationsquellen durch entsprechende Gewichtsfaktoren berücksichtigt werden.

Da beispielsweise an Kreuzungen, Weggabelungen und dergleichen keine eindeutige Infrastruktur-Kurshypothese aufgestellt werden kann, ist es zweckmäßig, zunächst mehrere Inftastruktur-Kurshypothesen zu erstellen, die jeweils einer möglichen Fahrtroute entsprechen. Für die Auswahl der wahrscheinlichsten Kurshypothese, die dann mit der dynamischen Kurshypothese fusioniert werden soll, kann häufig auf verschiedene Zusatzinformationen zurückgegriffen werden, beispielsweise auf das Setzen des Fahrnchtungsanzeigers (Blinker) oder, sofern ein Navigationssystem vorhanden ist und die Zielführung aktiv ist, Information über die vom Zielführungssystem berechnete Fahrtroute. Ein weiteres nützliches und praktisch immer zur Verfügung stehendes Kriterium für diese Auswahl ist die Ähnlichkeit der Infrastruktur-Kurshypothese mit der dynamischen Kurshypothese, da die dynamische Kurshypothese mit zunehmender Annäherung an eine Weggabelung oder dergleichen früher oder später eine Tendenz des Fahrers zu der einen oder der anderen Fahrtroute erkennen lassen wird.

Zeichnung

Ein Ausführungsbeispiel sowie Funktionsbeispiele der Erfindung sind in den Zeichnungen dargestellt und in der nachstehenden Beschreibung näher erläutert.

Es zeigen:

Figur 1 ein Blockdiagramm zur Illustration des erfindungsgemäßen Verfahrens;

Figur 2 ein Diagramm zur Erläuterung eines in dem Verfahren verwendeten Beschreibungssystems für Kurshypothesen; und

Figuren 3 bis 10 Situationsbeispiele zur Erläuterung der Wirkungsweise des erfindungsgemäßen Verfahrens.

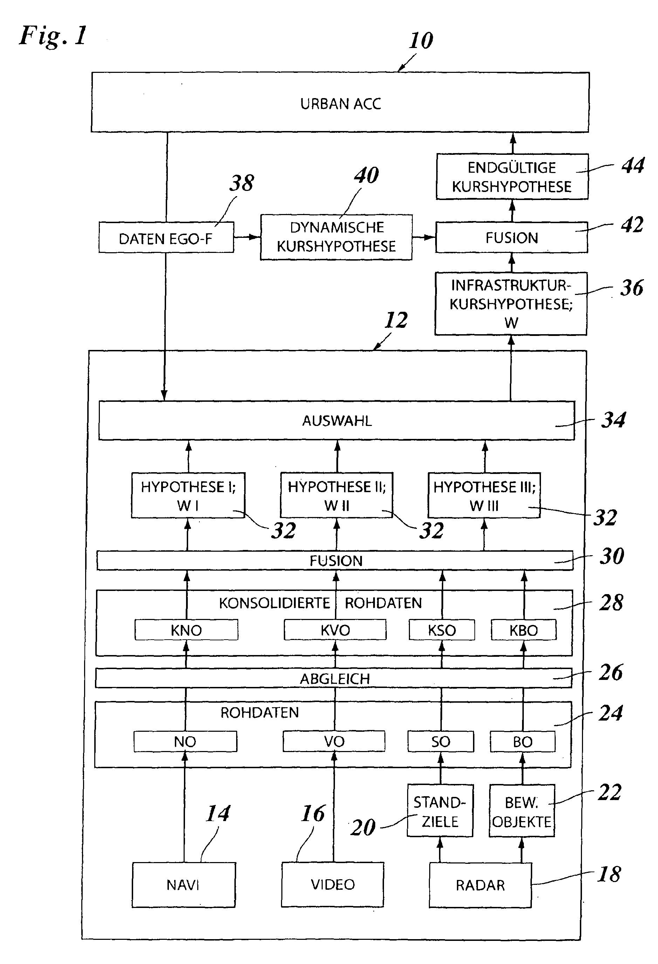

Figur 1 zeigt als Beispiel für ein Fahrerassistenzsystem ein ACC-System 10, das hier als "URBAN ACC" bezeichnet ist, um anzudeuten, daß das System auch für den Stadtverkehr geeignet sein soll. Das ACC-System 10 wird in bekannter Weise durch einen oder mehrere Mikrorechner und zugehörige Software gebildet und ist deshalb nur vereinfacht als Block dargestellt. Auch die zugehörige Sensorik ist in Figur 1 nicht näher gezeigt. Lediglich die Funktionen des Systems, die sich auf die Kursprädiktion beziehen, sind als gesonderter Block 12 herausgezogen.

Für die Kursprädiktion stehen im gezeigten Beispiel neben den fahrdynamischen Daten die folgenden Informationsquellen zur Verfügung: ein Navigationssystem 14, ein Videosystem 16 und ein Radarsystem 18, das auch die Daten für die Abstandsregelung im Rahmen der ACC-Funktion liefert. Das Radarsystem 18 ortet sowohl Standziele 20 als auch bewegliche Objekte 22. Die entsprechenden Ortungsdaten werden auf unterschiedliche Weise ausgewertet, so daß die Standziele und die beweglichen Objekte hier als unterschiedliche Informationsquellen behandelt werden.

Aus den insgesamt vier Informationsquellen werden Rohdaten 24 extrahiert. Diese Rohdaten 24 werden mathematisch repräsentiert als geometrische Objekte in einem einheitlichen zweidimensionalen Koordinatensystem. Diese Objekte sind je nach Informationsquelle mit NO, VO, SO, BO bezeichnet. In einer als "Abgleich" bezeichneten Verfahrensstufe 26 werden die Rohdaten miteinander und vorzugweise auch mit bereits früher erfaßten Daten derselben Art abgeglichen, um etwaige Widersprüche oder unplausible Sprünge festzustellen und soweit möglich zu beseitigen und Ungenauigkeiten zu korrigieren, die durch die Natur der jeweiligen Informationsquelle bedingt sind. Auf diese Weise erhält man konsolidierte Rohdaten 28, die mit KNO, KVO, KSO und KBO bezeichnet sind Dabei werden die Daten auch interpretiert und realen physikalischen Objekten zugeordnet.

In einem Schritt 30 "Fusion" werden dann die Rohdaten für einander entsprechende Objekte zusammengeführt, indem aus den Parametern und Koeffizienten, die die einzelnen Objekte beschreiben, neue synthetische Objekte generiert werden, die jeweils einer denkbaren Kurshypothese 32 entsprechen. Im gezeigten Beispiel werden drei vorläufige Kurshypothesen I - III gebildet.

In einem Auswahlschritt 34 wird hieraus die in der jeweiligen Situation wahrscheinlichste Hypothese als Infrastruktur-Kurshypothese 36 ausgewählt. Die Auswahl erfolgt anhand von Daten 38 ("Daten Ego-F") die sich auf das eigene Fahrzeug (Ego-Fahrzeug) beziehen. Beispiele für diese Daten sind die Gierrate oder der Lenkeinschlag oder vergleichbare dynamische Daten, die eine Tendenz des Fahrers anzeigen, den einen oder den anderen Kurs zu wählen, sowie ergänzend Daten über das Setzen des Fahrnchtungsanzeigers (Blinker) und, sofern die Zielführungsfunktion des Navigationssystems 14 aktiv ist, Daten über die berechnete Fahrtroute.

Aus den dynamischen Daten 38 wird außerdem in einem Berechnungsschritt 40 in bekannter Weise eine dynamische Kurshypothese berechnet. In einem weiteren Fusionsschritt 42 wird dann diese dynamische Kurshypothese 40 mit der ausgewählten Infrastruktur-Kurshypothese 36 zu einer endgültigen Kurshypothese 44 fusioniert, die an das ACC-System 10 übermittelt wird.

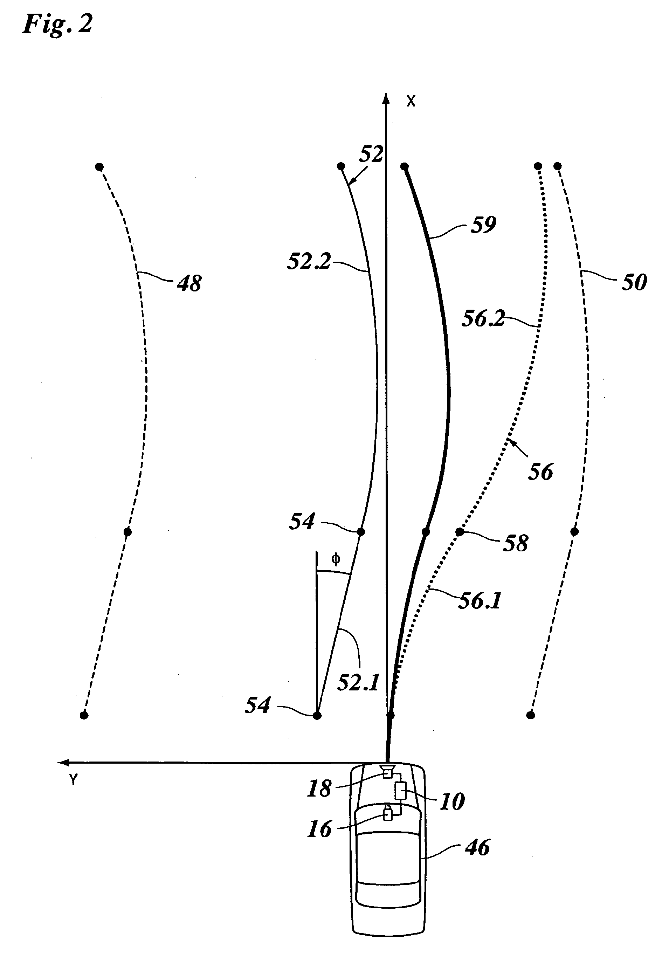

In Figur 2 ist symbolisch das "Ego-Fahrzeug" 46 dargestellt, das mit dem ACC-System 10 (einschließlich des Blockes 12 und des Navigationssystems 14) sowie mit dem Videosystem 16 und dem Radarsystem 18 ausgerüstet ist. Weiterhin ist ein zweidimensionales Kartesisches Koordinatensystem X-Y gezeigt, das zur mathematischen Beschreibung der als Rohdaten extrahierten geometrischen Objekte und der Kurshypothesen dient. Der Ursprung dieses Koordinatensystems wird durch die Front des Ego-Fahrzeugs 40 gebildet. Die X-Achse verläuft in Richtung der aktuellen Längsachse des Fahrzeugs, und die Y-Achse rechtwinklig dazu und parallel zur Fahrbahnebene.

Weiterhin sind in Figur 2 zwei Linienzüge 48 und 50 gezeigt, die beispielsweise die mit Hilfe des Videosystems 16 anhand von Markierungslinien auf der Fahrbahn erkannten linken und rechten Begrenzungen der vom Ego-Fahrzeug 46 befahrenen Fahrspur repräsentieren. Durch Fusion dieser Linienzüge erhält man eine Mittellinie 52, die den Verlauf der Fahrbahn angibt, der das Fahrzeug folgen wird. Diese Mittellinie kann somit als Repräsentant der Infrastruktur-Kurshypothese 36 betrachtet werden. Die Mittellinie 52 könnte aber auch das Ergebnis einer Fusion einer größeren Anzahl von Linienzügen sein, von denen einige auch aus den Daten des Navigationssystems oder des Radarsystems abgeleitet sein könnten.

Zur Repräsentation der Mittellinie 52 sowie sämtlicher anderer Linienobjekte wird ein einheitliches Beschreibungssystem verwendet, nämlich eine Beschreibung durch Linienstücke, z. B. 52.1, 52.2, die durch Ankerpunkte 54 begrenzt sind. Die Linienstücke werden ihrerseits repräsentiert durch Polynome der Form:

$$Y = Y_0 + \tan(\phi)*(X-X_0) + (1/2)*k*(X-X_0)^2 + (1/6)*dk*(X-X_0)^3$$

Darin ist $X_0$ die X-Koordinate des näher an der Y-Achse gelegenen Ankerpunktes 54, $\phi$ ist der Winkel, den die Tangente an diesen Ankerpunkt mit der X-Achse bildet, und die Koeffizienten k und dk gegen die Linienkrümmung bzw. die räumliche Änderung der Linienkrümmung an.

Um auch die Breite B des der Kurshypothese entsprechenden Fahrschlauches mit einzubeziehen, kann die folgende Polynomdarstellung verwendet werden:

$$Y = Y_0 \pm (B/2) + \tan(\phi)*(X-X_0) + (1/2)*k*(X-X_0)^2 + (1/6)*dk(X-X_0)^3$$

Ein Linienzug 56 in Figur 2 repräsentiert auf analoge Weise die dynamische Kurshypothese 40. Bei dem Linienzug 56 handelt es sich an sich um den Graphen eines einzigen Polynoms, dessen Koeffizienten durch die fahrdynamischen Daten bestimmt sind (Gierrate und deren Ableitung). Um jedoch die Fusion mit der Mittellinie 52 zu erleichtern, wird auch der Linienzug 56 durch Ankerpunkte 58 in Linienstücke 56.1, 56.2 unterteilt, wobei die Ankerpunkte 58 die gleichen X-Koordinaten haben wie die Ankerpunkte 54. Durch Entwickeln des Polynoms um die Ankerpunkte 58 erhält man Polynomdarstellungen für die Linienstücke 56.1 und 56.2.

Die Fusion der Mittellinie 52 mit dem Linienzug 56 in Schritt 42 in Figur 1 (Kurve 59) kann dann einfach dadurch erfolgen, daß in den Polynomdarstellungen für die einander entsprechenden Linienstücke eine gewichtete Summe aus den einander entsprechenden Koeffizienten gebildet wird. Wenn beispielsweise $k_d$ ein Koeffizient in dem Polynom für die dynamische Kurshypothese ist und $k_i$ der entsprechende Koeffizient in dem Polynom für die Infrastruktur-Kurshypothese, so erhält man den Koeffizienten k für das fusionierte Polynom nach der Formel:

$$k = k_d * (1 - W) + k_i * W.$$

Darin ist W ein Gewichtsfaktor. Dieser Gewichtsfaktor wird auf die folgende Weise erhalten. In dem Abgleichschritt 26 in Figur 1 wird zunächst für jede Informationsquelle gesondert ein Gewichtsfaktor festgelegt oder berechnet, der die Verläßlichkeit der betreffenden Informationsquelle angibt. Beispielsweise kann der Gewichtsfaktor für das Navigationssystem von der Auflösung der digitalen Karte von diesem Navigationssystem abhängig sein. Entsprechend sind die Gewichtsfaktoren für das Videosystem und das Radarsystem von der Genauigkeit der von diesen Systemen gelieferten Rohdaten abhängig, vorzugsweise, unter Berücksichtigung der Stabilität der in der Vergangenheit aufgenommenen Daten. In die Gewichtsfaktoren sollte auch die Plausibilität oder Zutreffenswahrscheinlichkeit der Interpretation dieser Daten als reale Objekte einfließen.

Diese Gewichtsfaktoren können auch zur Gewichtung bei der Fusion in Schritt 30 benutzt werden und werden außerdem in diesem Fusionsschritt zu einem Gesamt-Gewichtsfaktor für die entsprechende Kurshypothese kombiniert. Außerdem kann dieser Gesamt-Gewichtsfaktor erhöht werden, falls sich bei dem Abgleich ergibt, daß die miteinander fusionierten Rohdaten sehr gut übereinstimmen, und er kann in dem Maße verringert werden, wie Diskrepanzen zwischen den Rohdaten auftreten. Der Gesamt-Gewichtsfaktor kann für die verschiedenen Kurshypothesen 32 unterschiedlich sein, je nach dem welche Informationen bei der Fusion in die betreffende Kurshypothese eingeflossen sind. So erhält man also für jede Kurshypothese einen Gewichtsfaktor (W I, W II, W III). Der Gewichtsfaktor W ist dann derjenige dieser Gewichtsfaktoren, der zu der in Schritt 34 ausgewählten Kurshypothese gehört.

Weiterhin ist es möglich, bei dem Fusionsschritt 42 unterschiedliche Gewichtsfaktoren für die verschiedenen Paare von Linienstücken zu verwenden. Um dem Umstand Rechnung zu tragen, daß die dynamische Kurshypothese mit zunehmendem Abstand unzuverlässiger wird, könnte z. B. für die Fusion der Linienstücke 52.2 und 56.2 ein größerer Gewichtsfaktor gewählt werden als für die Linienstücke 52.1 und 56.1, so daß die Infrastruktur-Kurshypothese ein höheres Gewicht erhält.

Wenn bei fortgesetzter Fahrt des Ego-Fahrzeugs 46 ein neuer Streckenabschnitt in das Blickfeld der Sensoren gerät, werden für den neuen Streckenabschnitt eine neue Infrastruktur-Kurshypothese und eine neue dynamische Kurshypothese erstellt. Die oben beschriebene Fusionsprozedur, vorzugsweise mit stückweise unterschiedlichen Gewichtsfaktoren, kann dann auch dazu verwendet werden, stetig von der alten Kurshypothese auf die neue überzublenden.

In einer modifizierten Ausführungsform ist es auch möglich, der dynamischen Kurshypothese einen eigenen Gewichtsfaktor zuzuweisen und diesen Faktor in Abhängigkeit von der Stabilität oder Verläßlichkeit der dynamischen Kurshypothese zu variieren. Beispielsweise kann das Gewicht der dynamischen Kurshypothese reduziert werden, wenn sich der Fahrer aufgrund einer Unachtsamkeit der rechten oder linken Fahrbahngrenze genähert hat und dann zur Korrektur ein relativ abruptes Lenkmanöver ausführt.

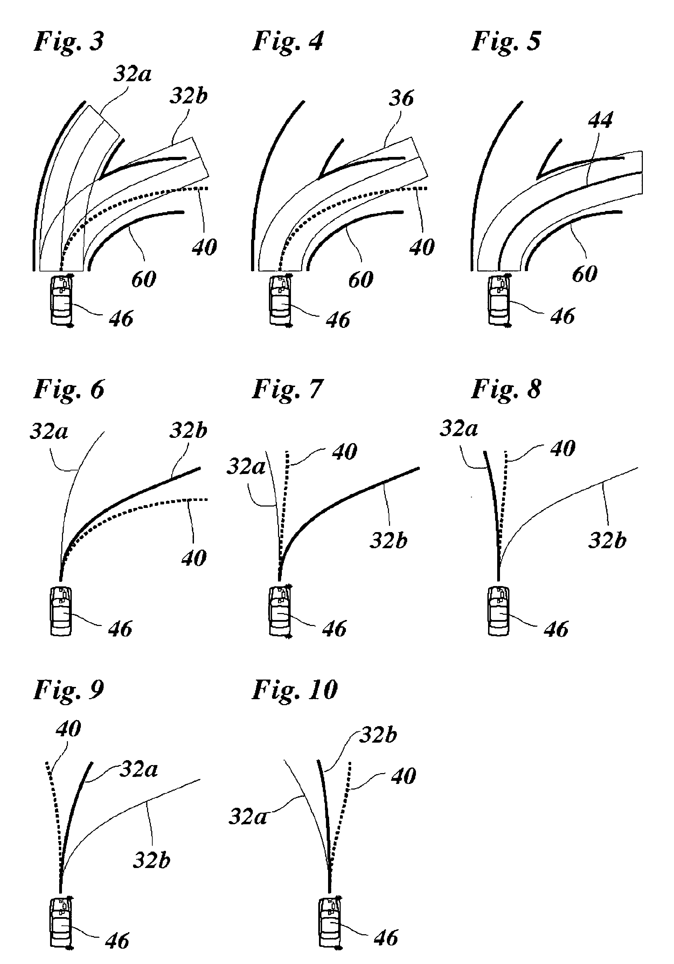

Figuren 3 bis 5 illustrieren am Beispiel einer speziellen Verkehrssituation die Erzeugung von zwei Kurshypothesen anhand der Infrastrukturdaten, die Auswahl der Infrastruktur-Kurshypothese 36 anhand der dynamischen Daten sowie die Fusion mit der dynamischen Kurshypothese. Auch eine Tiefpaßfilterung der Kurshypothesen ist zweckmäßig.

Die Erzeugung und Auswahl der Infrastruktur-Kurshypothese und ihre Fusion mit der dynamischen Kurshypothese sind in Figuren 3 bis 5 an einen Situationsbeispiel illustriert.

In Figur 3 nähert sich das Ego-Fahrzeug 46 einer gekrümmten Straßengabelung 60. Dementsprechend werden zwei Kurshypothesen 32a, 32b für die zur Auswahl stehenden Routen generiert. Dargestellt sind die entsprechenden Fahrschläuche sowie deren Mittellinien. Man erkennt, daß die Kurshypothese 32b aufgrund von Meß- oder Interpretationsfehlern vom tatsächlichen Straßenverlauf abweicht. Die dynamische Kurshypothese

40 ist als gestrichelte Linie eingezeichnet. Bei dem Ego-Fahrzeug 46 ist der rechte Blinker gesetzt. Da auch die dynamische Kurshypothese 40 auf ein Abbiegen nach rechts hindeutet, wird als Infrastruktur-Kurshypothese die Hypothese 32b ausgewählt (Figur 4). Figur 5 zeigt dann die durch Fusion erhaltenen endgültige Kurshypothese 44, die dem tatsächlichen Straßenverlauf besser angepaßt ist.

Figuren 6 bis 10 illustrieren an Beispielen, wie die dynamischen Daten, hier repräsentiert durch die dynamische Kurshypothese 40, die Auswahl der Infrastruktur-Kurshypothese beeinflussen. Von den beiden Kurshypothesen 32a, 32b ist jeweils diejenige, die als Infrastruktur-Kurshypothese ausgewählt wird, fett eingezeichnet.

In Figur 6 wird die Kurshypothese 32b ausgewählt, weil sie besser mit der dynamischen Kurshypothese 40 übereinstimmt.

In Figur 7 wird die Kurshypothese 32b ausgewählt, obwohl sie schlechter mit der dynamischen Kurshypothese 40 übereinstimmt als die alternative Kurshypothese 32a, weil beim Ego-Fahrzeug 46 der rechte Blinker gesetzt ist.

In Figur 8 ist in der gleichen Situation der rechte Blinker nicht gesetzt, und deshalb wird hier die Kurshypothese 32a ausgewählt.

In Figur 9 ist zwar der rechte Blinker gesetzt, aber beide Kurshypothesen 32a und 32b sind mit der Annahme verträglich, daß der Fahrer nach rechts abbiegen will. Da die dynamische Kurshypothese 40 eher auf Geradeausfahrt oder eine Linkskurve hindeutet, wird die Kurshypothese 32a gewählt, die weniger stark nach rechts abknickt.

In Figur 10 ist der rechte Blinker gesetzt, doch lassen die beiden Kurshypothesen 32a und 32b keine Abbiegemöglichkeit nach rechts erkennen. Es wird deshalb die Kurshypothese 32b gewählt, die besser mit der dynamischen Kurshypothese 40 übereinstimmt.

## Patentansprüche

1. Verfahren zur Kursprädiktion in Fahrerassistenzsystemen für Kraftfahrzeuge (46), bei dem anhand von fahrdynamischen Daten des Fahrzeugs eine dynamische Kurshypothese (40) erstellt wird, **gekennzeichnet durch** die folgenden Schritte:

   - Erstellen einer Infrastruktur-Kurshypothese (36) anhand von Daten, die die Verkehrsinfrastruktur beschreiben, aus mindestes einer Informationsquelle (14, 16, 18),
   - Berechnen eines Gewichtsfaktors (W), der die Verläßlichkeit der Infrastruktur-Kurshypothese (36) beschreibt, anhand von Merkmalen der Informationsquelle und
   - Fusionionieren der Infrastruktur-Kurshypothese (36) mit der dynamischen Kurshypothese (40) mit Gewichtung entsprechend dem berechneten Gewichtsfaktor (W), zur Bildung einer endgültigen Kurshypothese (44).

2. Verfahren nach Anspruch 1, **dadurch gekennzeichnet, daß** die Informationsquellen ein Radar- oder Lidar-System (18), ein Videosystem (16) und/oder ein Navigationssystem (14) umfassen.

3. Verfahren nach Anspruch 2, **dadurch gekennzeichnet, daß** die Infrastruktur-Kurshypothese (36) durch Zusammenführen von Daten aus mehreren Informationsquellen (14, 16, 18) gebildet wird, daß diese Daten vor oder beim Zusammemführen miteinander abgeglichen und auf Plausibilität geprüft werden und daß der Gewichtsfaktor (W) in Abhängigkeit vom Ergebnis des Abgleichs und/oder der Plausibilitätaprüfung variiert wird.

4. Verfahren nach Anspruch 3, **dadurch gekennzeichnet, daß** den aus verschiedenen Informationsquellen stammenden Daten jeweils ein gesonderter Gewichtsfaktor zugeordnet wird, der ihre Verläßlichkeit und/oder Plausibilität angibt, daß die Infrastruktur-Kurshypothese (36) durch Fusion dieser Daten, gewichtet mit ihren jeweiligen Gewichtsfaktoren, gebildet wird, und daß die einzelnen Gewichtsfaktoren zu dem Gewichtsfaktor (W) für die Fusion mit der dynamischen Kurshypothese (40) kombiniert werden.

5. Verfahren nach einem der vorstehenden Ansprüche, **dadurch gekennzeichnet, daß** die dynamische Kurshypothese (40) und die Infrastruktur-Kurshypothese (36) durch Polynome von gleicher Form repräsentiert werden.

6. Verfahren nach Anspruch 5, **dadurch gekennzeichnet, daß** die Polynome dritten Grades sind.

7. Verfahren nach einem der vorstehenden Ansprüche, **dadurch gekennzeichnet, daß** aus den Infrastrukturdaten zunächst mehrere Kurshypothesen (32) berechnet werden, die jeweils einen aufgrund der Infrastruktur möglichen Kurs beschreiben, und daß von diesen mehreren Kurshypothesen anhand zusätzlicher Informationen über erkennbare oder zu vermutende Absichten des Fahrers eine als Infrastruktur-Kurshypothese (36) ausgewählt wird.

8. Verfahren nach Anspruch 7, **dadurch gekennzeichnet, daß** die Auswahl der Infrastruktur-Kurshypothese in Abhängigkeit von fahrdynamischen Daten des Fahrzeugs erfolgt.

9. Verfahren nach Anspruch 7 oder 8, **dadurch gekennzeichnet, daß** die Auswahl der Inftastruktur-Kurshypothese in Abhängigkeit vom Zustand eine Fahrtrichtungsanzeigers und/oder in Abhängigkeit von Routeninformation eines Navigationssystems (14) erfolgt.

10. Fahrerassistenzsystem, ausgebildet zur Durchführung des Verfahrens nach einem der vorstehenden Ansprüche.

**Claims**

1. Method for course prediction in driver assistance systems for motor vehicles (46), in which a dynamic course hypothesis (40) is produced with the aid of driving dynamics data of the vehicle, **characterized by** the following steps:

   - producing an infrastructure course hypothesis (36) with the aid of data which describe the traffic infrastructure from at least one information source (14, 16, 18),
   - calculating a weighting factor (W) which describes the probability of the infrastructure course hypothesis (36) with the aid of features of the information source, and
   - merging the infrastructure course hypothesis (36) with the dynamic course hypothesis (40) with weighting in accordance with the calculated weighting factor (W) in order to form a final course hypothesis (44).

2. Method according to Claim 1, **characterized in that** the information sources comprise a radar or lidar system (18), a video system (16) and/or a navigation system (14).

3. Method according to Claim 2, **characterized in that** the infrastructure course hypothesis (36) is formed by combining data from a plurality of information sources (14, 16, 18), **in that** before or during combination these data are adjusted to one another and checked for plausibility, and **in that** the weighting factor (W) is varied as a function of the result of the adjustment and/or of the plausibility check.

4. Method according to Claim 3, **characterized in that** the data originating from various information sources are respectively assigned a separate weighting factor which specifies their reliability and/or plausibility, **in that** the infrastructure course hypothesis (36) is formed by merging these data in a fashion weighted with their respective weighting factors, and **in that** the individual weighting factors are combined to form the weighting factor (W) for merging with the dynamic course hypothesis (40).

5. Method according to one of the preceding claims, **characterized in that** the dynamic course hypothesis (40) and the infrastructure course hypothesis (36) are represented by polynomials of the same form.

6. Method according to Claim 5, **characterized in that** the polynomials are of third order.

7. Method according to one of the preceding claims, **characterized in that** they are firstly calculated from the infrastructure data of a plurality of course hypotheses (32) which respectively describe a possible course on the basis of the infrastructure, and **in that** from this plurality of course hypotheses one is selected as infrastructure course hypotheses (36) with the aid of additional information relating to intentions of the driver which can be detected or expected.

**8.** Method according to Claim 7, **characterized in that** the selection of the infrastructure course hypothesis is performed as a function of driving dynamics data of the vehicle.

**9.** Method according to Claim 7 or 8, **characterized in that** the selection of the infrastructure course hypothesis is performed as a function of the state of a driving direction indicator and/or as a function of route information of a navigation system (14).

**10.** Driver assistance system designed for carrying out the method according to one of the preceding claims.

**Revendications**

**1.** Procédé de prédiction de trajet dans des systèmes d'assistance au conducteur de véhicules automobiles (46), dans lequel une hypothèse dynamique (40) de trajet est formée à l'aide de données de la dynamique de roulage du véhicule,
**caractérisé par** les étapes suivantes :

établissement d'une hypothèse (36) d'infrastructure de trajet à l'aide de données qui décrivent l'infrastructure du trafic à partir d'au moins une source d'information (14, 16, 18),
calcul d'un facteur de pondération (W) qui décrit la fiabilité de l'hypothèse (36) d'infrastructure de trajet à l'aide de caractéristiques de la source d'information et
fusion de l'hypothèse (36) d'infrastructure de trajet et de l'hypothèse dynamique de trajet (40) avec une pondération qui correspond au facteur de pondération (W) qui a été calculé, pour former une hypothèse finale de trajet (44).

**2.** Procédé selon la revendication 1, **caractérisé en ce que** les sources d'information comprennent un système radar ou lidar (18), un système vidéo (16) et/ou un système de navigation (14).

**3.** Procédé selon la revendication 2, **caractérisé en ce que** l'hypothèse (36) d'infrastructure de trajet est formée par assemblage de données de plusieurs sources d'information (14, 16, 18), **en ce que** ces données sont ajustées les unes avec les autres, **en ce que** leur plausibilité est vérifiée et **en ce que** le facteur de pondération (W) est modifié en fonction du résultat du réglage et/ou de la vérification de plausibilité.

**4.** Procédé selon la revendication 3, **caractérisé en ce qu'**un facteur de pondération particulier est associé aux données provenant des différentes sources d'information et indique leur fiabilité et/ou leur plausibilité, **en ce que** l'hypothèse (36) d'infrastructure de trajet est formée par fusion de ces données pondérées par leur facteur de pondération particulier et **en ce que** les différents facteurs de pondération sont combinés avec le facteur de pondération (W) pour la fusion avec l'hypothèse dynamique de trajet (40).

**5.** Procédé selon l'une des revendications précédentes, **caractérisé en ce que** l'hypothèse dynamique de trajet (40) et l'hypothèse (36) d'infrastructure de trajet sont représentées par des polynômes de forme identique.

**6.** Procédé selon la revendication 5, **caractérisé en ce que** les polynômes sont du troisième degré.

**7.** Procédé selon l'une des revendications précédentes, **caractérisé en ce que** plusieurs hypothèses de trajet (32) sont d'abord calculées à partir des données d'infrastructure et décrivent chacune un trajet possible compte tenu de l'infrastructure, et **en ce qu'**une hypothèse est sélectionnée comme étant l'hypothèse (36) d'infrastructure de trajet parmi ces différentes hypothèses de trajet et à l'aide d'informations supplémentaires concernant l'intention détectée ou supposée du conducteur.

**8.** Procédé selon la revendication 7, **caractérisé en ce que** la sélection de l'hypothèse d'infrastructure de trajet s'effectue en fonction de données dynamiques de roulage du véhicule.

**9.** Procédé selon la revendication 7 ou 8, **caractérisé en ce que** la sélection de l'hypothèse d'infrastructure de trajet s'effectue en fonction de l'état d'un indicateur de direction de déplacement et/ou en fonction d'informations d'itinéraire d'un système de navigation (14).

**10.** Système d'assistance au conducteur configuré en vue d'exécuter le procédé selon l'une des revendications précédentes.

**Fig. 1**

**Fig. 2**

*Fig. 3*

*32a*

*32b*

*40*

*60*

*46*

*Fig. 4*

*36*

*40*

*60*

*46*

*Fig. 5*

*44*

*60*

*46*

*Fig. 6*

*32a*

*32b*

*40*

*40*

*46*

*Fig. 7*

*32a*

*40*

*32b*

*46*

*Fig. 8*

*32a*

*40*

*32b*

*46*

*Fig. 9*

*40*

*32a*

*32b*

*46*

*Fig. 10*

*32b*

*40*

*32a*

*46*

**EP 1 844 373 B1**

**IN DER BESCHREIBUNG AUFGEFÜHRTE DOKUMENTE**

**In der Beschreibung aufgeführte Patentdokumente**

- US 2003116373 A